# EUROPEAN PATENT APPLICATION

(11) **EP 2 725 453 A2**
(43) Date of publication of application: **30.04.2014**
(21) Application number: 13189480.0
(22) Date of filing: 21.10.2013
(51) Int. Cl.: G06F 1/32

(54) **Electronic apparatus comprising a battery charging state display mode and method of controlling the same**

(30) Priority: 24.10.2012 KR 20120118647
(71) Applicant: Samsung Electronics Co., Ltd, Gyeonggi-do 443-742 (KR)
(72) Inventor: Lee, Dong-geun, Gyeonggi-do (KR)
(74) Representative: Walaski, Jan Filip

(57) **Abstract**

A method of controlling an electronic apparatus includes receiving a user input to select an operation mode of the electronic apparatus in a power-off state of the electronic apparatus, supplying power only to one or more portions of components of the electronic apparatus required to operate in a battery charging state display mode when the operation mode selected according to the received user input is the battery charging state display mode, and displaying a batter charging state of a battery when the power is supplied to the components required to operate in the battery charging state display mode.

## Description

The present invention relates to an electronic apparatus and a method of controlling the same, and more particularly, to an electronic apparatus which displays charging state information of a battery provided therein and a method of controlling the same.

With development of electronic techniques, various kinds of electronic apparatuses have been developed and spread. In particular, electronic apparatuses based on excellent information technology (IT) such as the most advanced laptop computers, smart phones, or tablet computers have been spread.

In particular, the laptop computers have separate batteries to supply a battery power thereto in the state when an external power is not applied. The charging state of the battery has to be displayed for a user's use convenience. Therefore, various methods are used for displaying a charging state of a battery in a power-off state of the laptop computer.

For example, in the related art, the charging state of the battery is displayed using a separate light emitting diode (LED) disposed in the front of the laptop computer with color.

Therefore, it is necessary to effectively display the charging state of the battery.

The present general inventive concept provides an electronic apparatus which displays a charging state of a battery in a display unit in a battery charging state display mode by supplying power only to one or more portions of components thereof required to operate in the battery charging state display mode and a method of controlling the same.

Additional features and utilities of the present general inventive concept will be set forth in part in the description which follows and, in part, will be obvious from the description, or may be learned by practice of the general inventive concept

The foregoing and/or other features and utilities of the present general inventive concept may be achieved by providing a method of controlling an electronic apparatus having a plurality of operation modes. The method may include receiving a user input to select an operation mode of the electronic apparatus in a power-off state of the electronic apparatus, supplying power only to one or more portions of components of the electronic apparatus required to operate in a battery charging state display mode when the operation mode selected according to the user input is the battery charging state display mode, and displaying a charging state of a battery when the power is supplied to the components required to operate in the battery charging state display mode.

The method may further include supplying the power only to portions of the components of the electronic apparatus required to operate in a power-on mode when the operation mode selected according to the received user input is the power-on mode; and displaying an operating system execution screen when the power is supplied to the components required to operate in the power-on mode.

The user input may include at least one of a user input for connecting an external power supply to the electronic apparatus, a user input for selecting a first input unit for the battery charging state display mode, and a user input for selecting a second input unit for the power-on mode.

The method may further include determining the selected operation mode to the battery charging state display mode when the user input is the user input for connecting the external power supply to the electronic apparatus or the user input for selecting the first input unit; and determining the selected operation mode to the power-on mode when the user input is the user input for selecting the second input unit.

The portions of the components of the electronic apparatus required to operate in the battery charging state display mode may include a central processing unit (CPU), a volatile memory, a non-volatile memory, a main board chipset, a graphic processor, and a display unit.

The method may further include performing a first booting operation corresponding to the battery charging state display mode when the power is supplied only to the components required to operate in the battery charging state display mode. The performing a first booting operation may include initializing only a portion of a storage space of a volatile memory required to operate in the battery charging state display mode; and initializing a graphic processor for graphic display. The displaying a charging state of a battery may be performed after the first booting operation is completed.

The method may further include performing a second booting operation corresponding to the power-on mode when the power is supplied to the components required to operate in the power-on mode. The performing a second booting operation may include initializing the whole storage space of a volatile memory; and initializing all the components of the electronic apparatus required to operate in the power-on mode. The displaying an operating system execution screen may be performed when the second booting operation is completed.

The method may further include entering an S3 power-saving state when a battery charging state display period exceeds a preset duration.

The method may further include entering the power-off mode when an external power supply is ejected from the electronic apparatus in the battery charging state display mode or the S3 power-saving state.

The method may further include, when a second input unit for a power-on mode is selected according to the user input in the battery charging state display mode or the S3 power-saving state, supplying the power to portions of the components of the electronic apparatus required to operate in the power-on mode and performing a second booting operation corresponding to the power-on mode.

The displaying a charging state of a battery may include additionally displaying time information to the charging state of the battery.

The foregoing and/or other features and utilities of the present general inventive concept may also be achieved by providing an electronic apparatus having a plurality of operation modes. The electronic apparatus may include a display unit, a battery configured to store charged direct current (DC) power; an input unit configured to receive a user input to select an operation mode of the electronic apparatus, a power supply controller configured to supply power only to one or more portions of components of the electronic apparatus required to operate in a battery charging state display mode when the operation mode selected according to the received user input is the battery charging state display mode in a power-off state of the electronic apparatus, and a controller configured to control the display unit to display a charging state of a battery when the power is supplied only to the components of the electronic apparatus required to operate in the battery charging state display mode.

The power supply controller may supply the power to portions of the components of the electronic apparatus required to operate in a power-on mode when the operation mode selected according to the received user input is the power-on mode. The controller may control the display unit to display an operating system execution screen when the power is supplied to the components required to operate in the power-on mode.

The input unit may include an external power input unit configured to receive a user input for connecting an external power supply to the electronic apparatus; a first input unit configured to receive a user input for selecting the battery charging state display mode; and a second input unit configured to receive a user input for selecting the power-on mode.

The power supply controller may determine the selected operation mode to the battery charging state display mode when the user input is received through the external power input unit or the first input unit and the power supply controller may determine the selected operation mode to the power-on mode when the user input is received through the second input unit.

The portions of the components of the electronic apparatus requested to operate in the battery charging state display mode may include a central processing unit (CPU), a volatile memory, a non-volatile memory, a main board chipset, a graphic processor, and the display unit.

The controller may perform a first booting operation corresponding to the battery charging state display mode when the power is supplied only to components required to operate in the battery charging state display mode. The first booting operation may be performed by initializing a portion of a storage space of the volatile memory required to operate in the battery charging state display mode and initializing a graphic processor for graphic display.

The controller may cause the electronic apparatus to enter an S3 power-saving state when a battery charging state display period exceeds a preset duration.

The controller may cause the electronic apparatus to enter the power-off state when an external power supply is ejected from the electronic apparatus in the battery charging state display mode or the S3 power-saving state.

The electronic apparatus may be a laptop computer.

When it is determined as the battery charging state display mode, power is supplied to portions of the components of the electronic apparatus 100 required to operate in the battery charging state display mode to cause peripheral apparatuses such as hard disc drive (HDD), external ports, LEDs, fans, and the like not to operate. Therefore, it can cause the user not to determine that the electronic apparatus is powered-on or malfunctions and unnecessary power loss can be prevented.

The booting operation corresponding to the battery charging state display mode is performed separately from the booting operation corresponding to the power-on mode so that fast POST can be performed in the battery charging state display mode. That is, in the battery charging state display mode, only a partial storage space of a volatile memory is initialized and unnecessary peripheral apparatuses are not initialized so that POST can be performed faster as compared in the power-on mode.

When the battery charging state is displayed according to the user input in the S3 power-saving state, the process of initializing the volatile memory and a process of copying firmware to the volatile memory may be omitted. Since battery charging state display data is read from high-speed volatile memory, the battery charging state can be further quickly displayed.

When the power-on mode is selected in the battery charging state display mode or in the S3 power-saving state, a normal booting corresponding to the power-on mode can be performed. Further, in this case, system restart is used and thus time required in the power-on mode operation can be shortened.

The electronic apparatus enters the S3 power-saving mode after a constant time is elapsed, power consumption can be minimized.

The foregoing and/or other features and utilities of the present general inventive concept may also be achieved by providing a computer-readable medium to contain computer-readable codes as a program to execute the method describe above or hereinafter.

The foregoing and/or other features and utilities of the present general inventive concept may also be achieved by providing an electronic apparatus usable with a laptop computer, including a battery, an input unit to exclusively select a battery charging state display mode and a power-on mode in a power-off state of the electronic apparatus, and a controller configured to generate a display of a battery charging amount of the battery in response to the battery charging state display mode in the power-off state, and to generate another display of an operating system executing screen in response to the power-on mode.

The foregoing and/or other features and utilities of the present general inventive concept may also be achieved by providing an electronic apparatus having a plurality of operation modes, the electronic apparatus including a battery, a display unit; an input unit having a first input unit configured to receive a first user input to select a battery charging state display mode, and a second input unit configured to be independent of the first input unit and to receive a second user input to select a power-on mode, and a controller configured to perform a first booting operation to control the display unit to display a battery charging state of the battery on the display unit in response to the first user input of the first input unit, and to perform a second booting operation to control the display unit to display an operating system executing screen on the display unit in response to the second user input and the second booting operation.

The foregoing and/or other features and utilities of the present general inventive concept may also be achieved by providing an electronic apparatus usable with a laptop computer, including a main body and a display body movable with respect to each other, a battery connectable to at least one of the main body and a display body, an input unit disposed on one of the main body and the display body to select a battery charging state display mode and a power-on mode, and a controller configured to perform a first booting operation in response to the battery charging state display mode to generate a display of a variable battery charging state display of the battery according to the first booting operation, and to perform a second booting operation in response to the selected power-on mode to generate another display of an operating system executing screen according to the second booting operation.

These and/or other features and utilities of the present general inventive concept will become apparent and more readily appreciated from the following description of the embodiments, taken in conjunction with the accompanying drawings of which:
FIG. 1 is a block diagram illustrating an electronic apparatus according to an exemplary embodiment of the present general inventive concept;
FIG. 2 is a detailed block diagram illustrating the electronic apparatus of FIG. 1;
FIGS. 3 to 6 are flowcharts illustrating a method of controlling an electronic apparatus according to an exemplary embodiment of the present general inventive concept;
FIG. 7 is a perspective view illustrating a laptop computer as an example of an electronic apparatus according to an exemplary embodiment of the present general inventive concept; and
FIG. 8 is a perspective view illustrating a battery charging state display of a laptop computer of FIG. 7 according to an embodiment of the present general inventive concept.

Reference will now be made in detail to the embodiments of the present general inventive concept, examples of which are illustrated in the accompanying drawings, wherein like reference numerals refer to the like elements throughout. The embodiments are described below in order to explain the present general inventive concept while referring to the figures.

The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

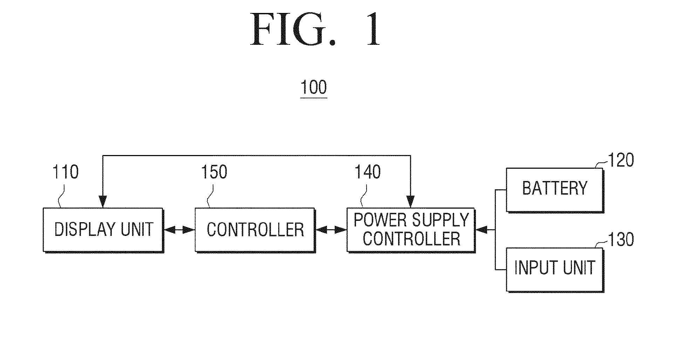

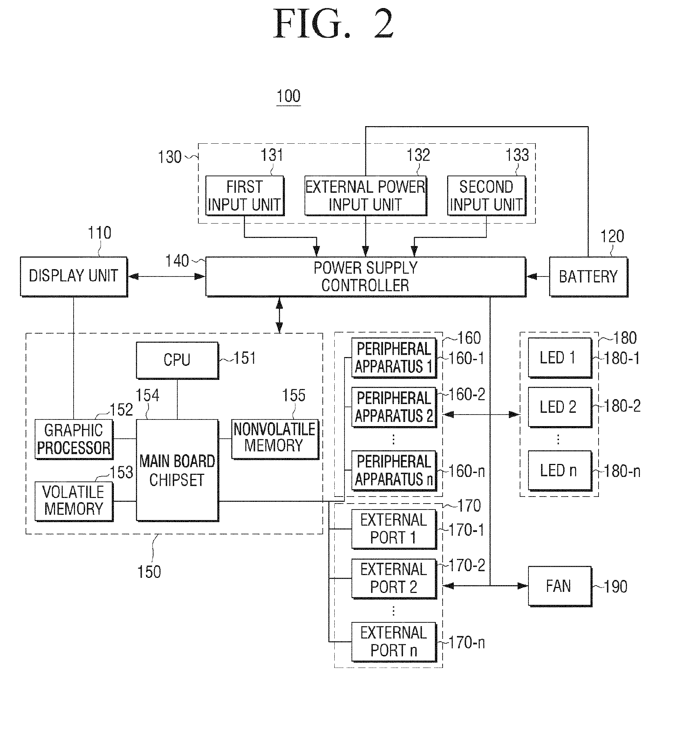

FIG. 1 is a block diagram illustrating an electronic apparatus 100 according to an exemplary embodiment of the present general inventive concept. FIG. 2 is a detailed block diagram illustrating the electronic apparatus 100 of FIG. 1. Referring to FIGS. 1 and 12, the electronic apparatus 100 include a portion or all of a display unit 110, a battery 120, an input unit 130, a power supply controller 140, a controller 150, a peripheral apparatus 160, an external port 170, an LED 180, and a fan 190.

Here, the input unit 130 may include a portion of or all a first input unit 131, an external power input unit 132, and a second input unit 133. Further, the controller 150 may include a portion of or all a CPU 151, a graphic processor 152, a volatile memory 153, a main board chipset 154, and a non-volatile memory 155. The peripheral apparatus 160 may include a plurality of peripheral apparatuses such as peripheral apparatus 1160-1, a peripheral apparatus 2 160-2, and a peripheral n 160-n. The external port 170 may include a plurality of external ports such as an external port 170-1, an external port 2 170-2, and the external port n 170-n. The LED 180 may include a plurality of LEDs such as an LED 1180-1, an LED 2180-2, and an LED n 180-n. The LED 180 may be referred to as a secondary display unit.

The electronic apparatus 100 may be a laptop computer.

The display unit 110 performs a function to display a screen. The display unit 110 may display a charging state of the battery 120 in a battery charging state display mode. Further, the display unit 110 may additionally display time information to the charging state of the battery 120 in the battery charging state display mode.

The display unit 110 may display an operating system execution screen in a power-on mode.

Here, the display unit 110 may be a liquid crystal display (LCD), a thin film transistor-liquid crystal display (TFT-LCD), an organic light emitting diode (OLED), a flexible display, a three-dimensional (3D) display, or a transparent display.

The battery 120 is a battery repetitively usable through a discharging process in which chemical energy is transformed into electrical energy and a charging process in which electrical energy is transformed into chemical energy. Here, the battery 120 may include a charging circuit configured to charge power applied through the external power input unit 132. Thus, the battery 120 may supply charged direct current (DC) power to the electronic apparatus 100.

The input unit 130 receives a user input to select an operation mode of the electronic apparatus 100. Here, the input unit 130 may include the first input unit 131, the external power input unit 132, and the second input unit 133.

The first input unit 131 may be disposed in one region of the electronic apparatus 100 and receive the user input to select the battery charging state display mode. Here, the first input unit 131 may be implemented in various types such as a button type or a touch type.

The external power input unit 132 may receive power supplied from an external power supply (not illustrated). Further, the external power input unit 132 may determine whether or not a user input to connect the external power supply to the electronic apparatus 100 is received according to a power supply state from the external power supply. Here, the external power supply may be an external alternative current (AC) adaptor configured to supply the power to the electronic apparatus including the battery 120.

The second input unit 133 may be disposed in one region of a body of the electronic apparatus 100 and receive a user input to select the power-on mode. Here, the second input unit 133 may be implemented with various types such as a button type or a touch type.

The peripheral apparatuses 160-1, 160-2, and 160-n may include various apparatuses such as one or more hard disk drives (HDDs), sound cards, local area networks (LANs), or cards, which is connected to the main board chip set 154 through connectors.

The external ports 170-1, 170-2, and 170-n may include various ports such as a universal serial bus (USB) port, a high-definition multimedia interface (HDMI), a 1394 port, which are provided in the main board chipset 154.

The LEDs 180-1, 180-2, and 180-n may perform a function for displaying a state of the electronic apparatus 100 and be disposed in one region of the electronic apparatus 100 to be viewed by a user. For example, the LEDs 180-1, 180-2, and 180-n may distinguishably display a power-on state and an operation state of a memory unit, for example, the HDD, with various colors.

The fan 190 may be a thermal fan used to cool the electronic apparatus 100.

The power supply controller 140 may determine an operation mode of the electronic apparatus 100 according to a current operation mode of the electronic apparatus 100 and the user input received (selected) through the input unit 130. Further, the power supply controller 140 may control a power supply to one or more components of the electronic apparatus 100 required to perform the determined operation mode.

Here, the operation mode according to the exemplary embodiment may include the power-off mode, the power-on mode, the battery charging state display mode, and a power saving (sleep or standby) mode, for example, an S3 power-saving mode defined in the advanced configuration and power interface (ACPI) specification.

The power-off mode means a state corresponding to an S5 state which is a general term of a computer field according to the ACPI specification, that is, an operation mode to control the electronic apparatus 100 to be set to operate in a power-off state. However, according to the embodiment, the input unit 130 is configured to receive the user input and the power supply controller 140 is configured to operate in the power-off mode. On the other hand, in the power-off mode, the electronic apparatus 100 may enter the power-off state.

The power-on mode may mean a state corresponding to an S0 power-saving mode which is a general term in the computer field according to the ACPI specification, that is, an operation mode to execute the operating system (for example, WINDOWS or LINUS) and to control the electronic apparatus to be set to operate in a power-on state. In the power-on mode, the electronic apparatus 100 may enters the power-on state and display an operating system execution screen.

The battery charging state display mode is a separate mode according to an exemplary embodiment and means an operation mode to display a charging state of the battery provided in the electronic apparatus 100. In the battery charging state display mode, the electronic apparatus 100 may display the charging state of the battery.

The S3 power-saving mode is an operation mode to store all pieces of information in, a volatile memory, for example, the volatile memory 153, and to control only the volatile memory 153 to operate in the power-on state. However, the S3 power-saving mode in the exemplary embodiment is different from the S3 power-saving mode as a general term in the computer field. For example, the S3 power-saving mode in the exemplary embodiment is a mode that the electronic apparatus enters the S3 power-saving mode when a battery charging state display period exceeds a preset duration, and the S3 power-saving mode as a general term in the computer field according to the ACPI specification is a mode that the electronic apparatus enter the S3 power-saving mode when a preset duration is elapsed in the power-on mode. Therefore, in the S3 power-saving mode in the exemplary embodiment, information to display the battery charging state may be stored in the volatile memory 153. The electronic apparatus may enter the S3 power saving state in the S3 power-saving mode.

The power supply controller 140 may determine the operation mode selected according to the user input to the battery charging state display mode when the user input is received through the first input unit 131 or when the user input to connect the external power supply to the external power input unit 132 is received through the external power input unit 132, in the power-off state of the electronic apparatus 100. In this case, the power supply controller 140 may supply the power only to one or more portions of components of the electronic apparatus 100 which are required to operate in the battery charging state display mode in the power-off state. Here, the components required to operate in the battery charging state display mode in the power-off off may include the CPU 151, the volatile memory 153, the non-volatile memory 155, the main board chipset 154, the graphic processor 152, and the display unit 110.

The power supply controller 140 may determine the operation mode selected according to the user input to the power-on mode when the user input is received through the second input 133 in the power-off state of the electronic apparatus 100. In this case, the power supply controller 140 may supply the power to one or more portions of the components of the electronic apparatus 100 required to operate in the power-on mode in the power-off state. Here, the components required to operate in the power-on mode in the power-off state may include the CPU 151, the volatile memory 153, the non-volatile memory 155, the main board chipset 154, the graphic processor 152, the display unit 110, the peripheral apparatus 160, the external port 170, the LED 180, and the fan 190.

Further, the power supply controller 140 may determine the operation mode selected by the user input to the battery charging state display mode when the user input is received through the first input unit 131 or the user input to connect the external power supply to the external power input unit 132 is received through the external power input unit 132, in the S3 power-saving state. In this case, the power supply controller 140 may supply the power only to a portion of the components of the electronic apparatus 100 required to operate in the battery charging state display mode in the S3 power-saving state. Here, the components required to operate in the battery charging state display mode in the S3 power-saving state may include the CPU 151, the non-volatile memory 155, the main board chipset 154, the graphic processor 152, and the display unit 110.

Further, the power supply controller 140 may determine the operation mode selected according to the user input to the power-off mode when the user input for ejecting the external power supply from the external power input unit 132 is received through the external power input unit 132 in the battery charging state display state or the S3 power-saving state. In this case, the power supply controller 140 may block power supply to all components constituting the electronic apparatus 100.

The power supply controller 140 may determine the operation mode selected according to the user input to the power-on mode when the user input is received through the second input unit 133 in the battery charging state display state or the S3 power-saving state. In this case, the power supply controller 140 may supply the power to one or more portions of the component of the electronic apparatus 100 other than the components to which the power has been supplied in the battery charging state display mode. Alternatively, the power supply controller 140 may supply the power to one or more portions of the components of the electronic apparatus other than the components to which the power has been supplied in the S3 power-saving state.

On the other hand, the electronic apparatus 100 may enter the S3 power-saving mode when a battery charging state display period exceeds a preset duration. In this case, the power supply controller 140 may supply the power only to the volatile memory 153, for example.

Here, power supplied to the power supply controller 140 may include at least one of a first power supplied from an external power supply connected to the external power input unit 132 and a second power supplied from the battery 120. Therefore, the power supply controller 140 may control the power to be supplied to the components of the electronic apparatus using at least one of the first power supplied from the external power supply connected to the external power input unit 132 and the second power supplied from the battery120.

As described above, when the operation mode is determined as the battery charging state display mode, the power is supplied to the portions of the components of the electronic apparatus 100 required to operate in the battery charging state display mode to control the peripheral apparatus such as the HDD, the external port, the LED, the fan, and the like not to operate. Therefore, according to the embodiment of the present general inventive concept, it is not necessary to set the electronic apparatus in the powered-on mode to perform one of the functions or operations of the electronic apparatus, or malfunctions and unnecessary power loss can be prevented.

The controller 150 controls an overall operation of the electronic apparatus 100. The controller 150 may control the electronic apparatus 100 to perform an operation corresponding to each operation mode when the power is supplied according to an operation of the above-described power supply controller 140. It is possible that the power supply controller 140 and the controller 150 may be formed as a single control unit to have corresponding components to perform the corresponding functions.

When the battery charging state display mode is selected according to the user input in the power-off state of the electronic apparatus 100, the controller 150 may perform a first booting operation.

The CPU 151 may load basic input output system (BIOS) stored in the non-volatile memory 155 into the volatile memory 153, execute the loaded BIOS, and perform the first booting operation.

In this case, the CPU 151 may control only a portion of a storage space of the volatile memory 153 required to operate in the battery charging state display mode to be initialized and may control the graphic processor 152 to be initialized to provide a graphic display, so that the first booting operation may be performed.

When the first booting operation is completed, the controller 150 may control the display unit 110 to display the charging state of the battery according to the graphic display provided by the graphic processor 152 without an operating system execution.

The controller 150 may perform a second booting operation when the power-on mode is selected according to the user input in the power-off state of the electronic apparatus 100.

The CPU 151 may load the BIOS stored in the non-volatile memory 155 into the volatile memory 153, execute the loaded BIOS, and perform the second booting operation.

In this case, the CPU 151 may control an entire storage space of the volatile memory 153 to be initialized and all components of the electronic apparatus 100 required to operate in the power-on mode to be initialized so that the second booting operation corresponding to the power-on mode may be performed.

When the second booting operation is completed, the controller 150 may execute operating system and control the display unit 110 to display an operating system execution screen.

As described above, the booting operation corresponding to the battery charging state display mode is performed separately from the booting operation corresponding to the power-on mode so that a fast power-on self-test (POST) may be performed in the battery charging state display mode. That is, in the battery charging state display mode, only a portion of the storage space of the volatile memory is initialized and unnecessary peripheral apparatuses are not initialized so that the POST may be performed faster, as compared to the POST performed in the power-on mode from the power-off state.

The controller 150 omits initialization for the volatile memory 153 and performs initialization for the graphic processor 152 for graphic display, when the battery charging state display mode is selected according to the user input in the S3 power-saving state of the electronic apparatus 100.

The CPU 151 may omit the initialization of the volatile memory 153, initialize the graphic processor 152, and load information for a battery charging state display generated according to a previous battery charging state display mode from the volatile memory 153. In this case, the controller 150 may control the display 110 to display the battery charging state using the loaded information.

That is, as described above, when the battery charging state is displayed according to the user input in the S3 power-saving state, the initialization process of the volatile memory 153 and the copy process of firmware to the volatile memory 153 may be omitted and battery charging state display data is read from the high-speed volatile memory 153 so that the battery charging state can be further quickly displayed according to the read battery charging state display data.

The controller 150 may control the electronic apparatus 100 to operate in the power-off mode when the power-off mode is selected according to the user input in the battery charging state display mode (that is, from when the battery charging state display mode is selected according to the user input before when the battery charging state is displayed in the display unit) of the electronic apparatus 100 or the S3 power-saving state.

Further, the controller 150 may perform a system restart operation (the second booting operation) when the power-on mode is selected according to the user input in the battery charging state display mode (that is, in a period after a time when the battery charging state display mode is selected according to the user input before a time when the battery charging state is displayed in the display unit) of the electronic apparatus 100 or the S3 power-saving state.

The CPU 151 may load the BIOS stored in the non-volatile memory 155 to the volatile memory 153, execute the loaded BIOS, and perform the second booting operation.

In this case, the CPU 151 may control an entire storage space of the volatile memory 153 to be initialized and control all the components of the electronic apparatus 100 required to operate in the power-on mode to be initialized and so that the second booting operation may be performed.

On the other hand, when the second booting operation is completed, the controller 150 may execute an operating system and control the display unit 110 to display an operating system execution screen.

As described above, when the power-on mode is selected in the battery charging state display mode or the S3 power-saving state, it is possible that the controller 150 may perform normal booting corresponding to the power-on mode. In this case, since a system restart is used, a time required in a power-on mode operation can be shortened. That is, the controller 150 may perform the booting operation without turning off and on the electronic apparatus 100.

Further, the controller 150 may compare a battery charging state display period of the electronic apparatus 100 with a preset duration to control the operation of the electronic apparatus. When the battery charging state display period of the electronic apparatus 100 is less than the preset duration, the controller 150 may control the display unit 110 to display the battery charging state until the battery charging state display period exceeds the preset duration. During a period of displaying of the battery charging state, when the battery charging state (for example, a case in which charging ratio is increased) is updated, the controller 150 may control the display unit 110 to reflect the updated battery charging state and display the reflection result. On the other hand, when the battery charging state display period of the electronic apparatus 100 exceeds the preset duration, the controller 150 controls the electronic apparatus to enter the S3 power-saving mode. In this case, the controller 150 may control the operation corresponding to the S3 power-saving mode and thus the electronic apparatus becomes in the S3 power-saving state.

That is, as described above, the electronic apparatus enters the S3 power saving mode after a predetermined time is elapsed and thus power consumption can be minimized.

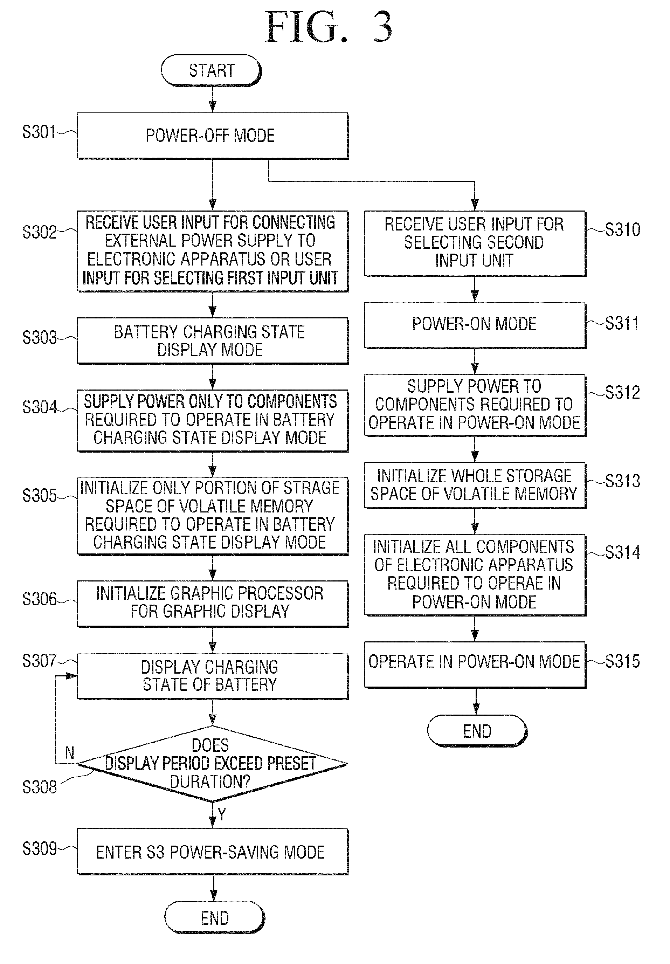

FIGS. 3 to 6 are flowcharts illustrating a method of controlling an electronic apparatus according to an exemplary embodiment of the present general inventive concept.

Referring to FIG. 3, in a power-off state of the electronic apparatus at operation S301, when a user input to connect an external power supply to the electronic apparatus and/or a user input to select a first input for a battery charging state display mode is received at operation S302, a power supply controller determines an operation mode of the electronic apparatus to the battery charging state display mode at operation S303.

When it is determined that the operation mode is the battery charging state display mode, the power supply controller supplies the power to one or more portions of components of the electronic apparatus required to operate in the battery charging state display mode at operation S304.

The controller initializes a portion of a storage space of the volatile memory required to operate in the battery charging state display mode at operation S305, initializes a graphic processor for a graphic display at operation S306, and thus perform a first booting operation.

Then, the controller displays a battery charging state of a battery in a display unit at operation S307. When a battery charging state display period exceeds a preset duration at operation S308:Y, the electronic apparatus 100 operates in an S3 power-saving mode and enters the S3 power-saving state at operation S309. When the battery charging state display period does not exceed the preset duration at operation S308:N, the controller displays the charging state of the battery until the battery charging state display period exceeds the preset duration at operation S307.

On the other hand, in the power-off state of the electronic apparatus at operation S301, when a user input to select the second input unit for a power-on mode is received at operation S310, the power supply controller determines the operation mode of the electronic apparatus to the power-on mode at operation S311.

When it is determined that the operation mode is the power-on mode, the power supply controller supplies the power to corresponding portions of the components of the electronic apparatus required to operate in the power-on mode at operation S312.

The controller initializes an entire storage space of the volatile memory at operation S313, initializes all components of the electronic apparatus required in the power-on mode at operation S314, and thus performs a second booting operation.

The controller displays an operating system executing screen in the display unit at operation S315.

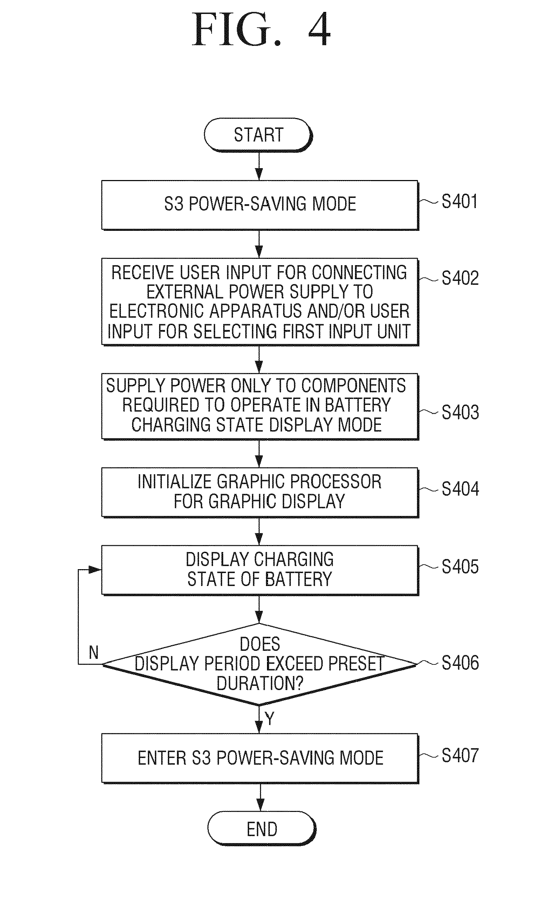

Referring to FIG. 4, in an S3 power-saving state as the operation mode of the electronic apparatus at operation S401, when the user input to connect the external power supply to the electronic apparatus and/or the user input to select the first input unit for the battery charging state display mode is received at operation S402, the power supply controller determines the operation mode of the electronic apparatus to the battery charging state display mode.

When it is determined that the operation mode is the battery charging state display mode, the power supply controller supplies the power to only one or more portions of the components of the electronic apparatus required to operate in the battery charging state display mode at operation S403.

The controller initializes the graphic processor for a graphic display at operation S404 and thus performs a booting operation. Then, the controller displays the charging state of the battery in the display unit at operation S405. When the battery charging state display period exceeds the preset duration at operation S406:Y, the electronic apparatus 100 operates in the S3 power-saving mode and enters the S3 power-saving state at operation S407. When the battery charging state display period does not exceed the preset duration at operation S406:N, the controller displays the charging state of the battery in the display unit until the battery charging state display period exceeds the preset duration at operation S406.

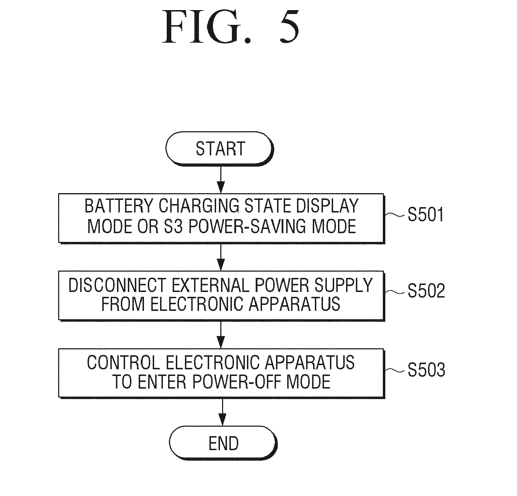

Referring to FIG. 5, in the battery charging state display mode or the S3 power-saving state of the electronic apparatus at operation S501, an external power supply connected to the electronic apparatus is detached or disconnected from the electronic apparatus at operation S502 and the electronic apparatus is controlled to operate in the power-off mode and to enter the power-off state at operation S503.

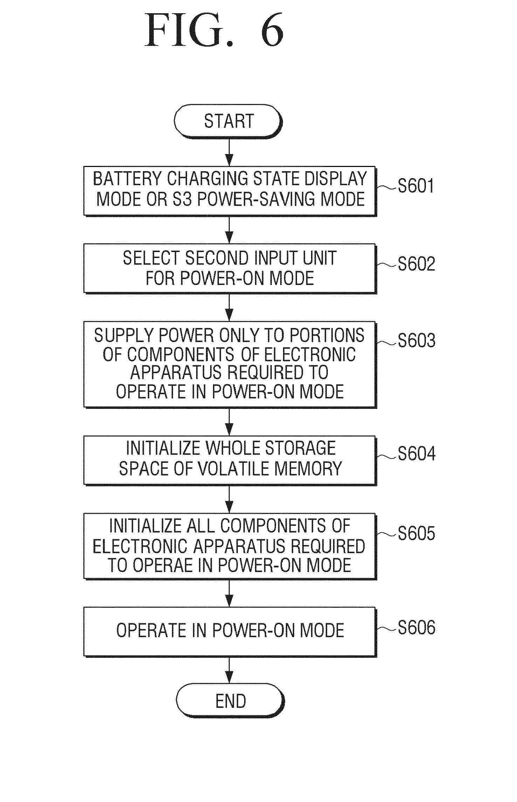

Referring to FIG. 6, in a state in which the operation mode of the electronic apparatus is the battery charging state display mode or the S3 power-saving state at operation S601, when the second input unit for the power-on mode is selected at operation S602, the power supply controller determines the operation mode to the power-on mode.

When it is determined that the operation mode of the electronic apparatus is the power-on mode, the power supply controller supplies the power to portions of the components of the electronic apparatus required to operate in the power-on mode at operation S603.

The controller initializes an entire storage space of a volatile memory at operation S604, initializes all components of the electronic apparatus require to operate in the power-on mode at operation S605, and thus performs the second booting operation.

The controller displays the operating system execution screen in the display unit at operation S606.

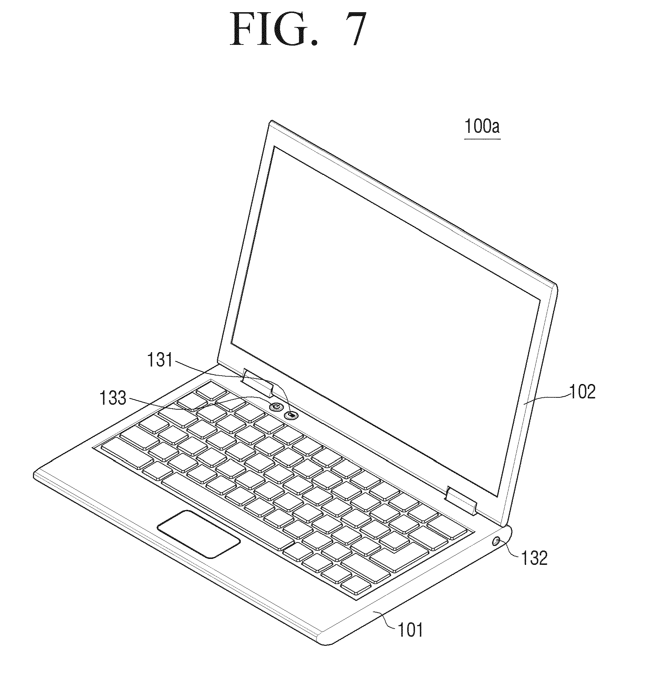

FIG. 7 is a perspective view illustrating a laptop computer 100a as an example of the electronic apparatus 100 of FIG. laccording to an exemplary embodiment of the present general inventive concept. Referring to FIG. 7, the laptop computer 100a includes a first input unit 131 disposed in one region of the laptop computer 100a, a second input unit 133, and an external power input unit 132. Hereinafter, the laptop computer 110s is described in the power-off state.

In this case, when a user presses the first input unit 131 or the external power supply is connected to the external power input unit 132, the laptop computer 100a may operate in the battery charging state display mode and display a battery charging state display screen on a screen of a display unit thereof. Further, when the user presses the second input unit 133, the laptop computer 100 may operate in the power-on mode and display an operating system execution screen on the screen of the display thereof.

The first input unit 131, the second input unit 133, and the external power input unit 132 are arranged on a body of the laptop computer 100a as illustrated in FIG. 7.However, the present general inventive concept is not limited thereto. It is possible that the first input unit 131, the second input unit 133, and the external power input unit 132 may be disposed at different locations on the body of the laptop computer 110a.

Further, the first input unit 131 and the second input unit 133 are implemented in a button type in FIG. 7, but it is not limited thereto. It is possible that the first input unit 131 and the second input unit 133 may be implemented in various types. Although the first input unit 131 and the second input unit 133 are illustrated as separate units in FIG. 7, it is possible that the first input unit 131 and the second input unit 133 may be formed as a single unit such that the number of pressing operations (or lengths of pressing periods) of the single unit corresponds to a user input of the first input unit 131 and a user input of the second input unit 133, respectively.

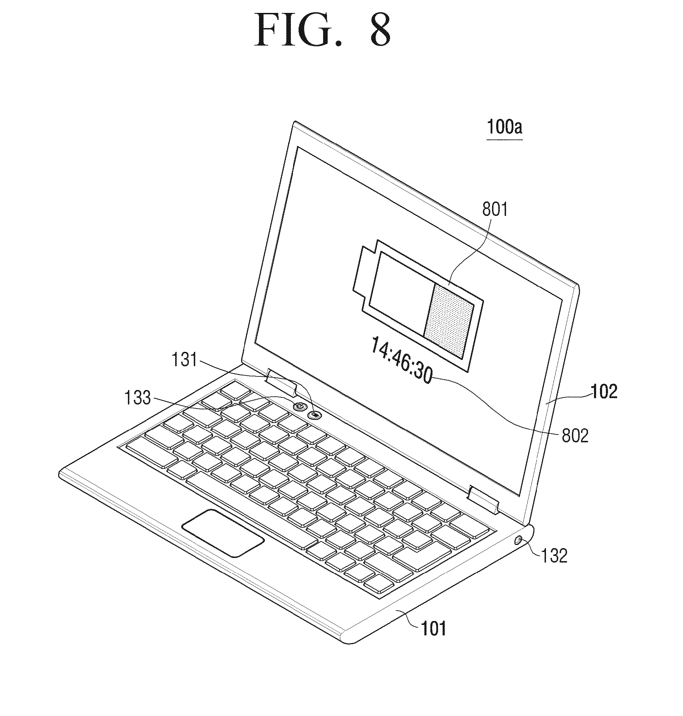

FIG. 8 is a perspective view illustrating the laptop computer 100a of FIG. 7 to display a battery charging change state according to an embodiment of the present general inventive concept. Referring to FIG. 8, the laptop computer 100a may display a battery charging state screen on the display unit thereof. Here, the battery charging state screen may include an area 801 configured to display a battery charging state and an area 802 configured to display time information.

However, the battery charging state screen of FIG. 8 is illustrated for clarity, but the battery charging state screen may be displayed in other types. For example, the region 801 configured to display the battery charging state may be displayed with a characteristic other than a shape of a battery. The characteristic of the battery charging state may be one or more numbers indicating battery charging percentage information as the battery charging state. It is possible that both the shape of the battery and the characteristic can be displayed in the region 801. It is also possible that a time period to be taken to charge the battery can be displayed on the display unit. It is also possible that a combination of the shape of the battery, the characteristic, and the time period can be displayed on the display unit. Further, the area 802 configured to display the time information may be displayed further by including year/month/day information.

As illustrated in FIGS. 7 and 8, the exemplary embodiment has illustrated to select the battery charging state display mode and to display the battery charging state in a main screen of the display unit and thus may not include a separate auxiliary display unit configured to display the battery charging state.

The laptop computer 100a may include a main body 101 and a display body 10 electrically and mechanically connected to the main body 101. It is possible that the main body 101 and the display body 102 may be detachably attached to each other depending on a user selected operation state. The main body 101 and the display body 102 may be moveable with respect to each other when being connected. The first input unit 131, the second input unit 133, and the external power input unit 132 may be formed on the main body 101 as illustrated in FIGS. 7 and 8. However, the present general inventive concept is not limited thereto. It is possible that one or more of the first input unit 131, the second input unit 133, and the external power input unit 132 can be selectively disposed on the display body 102.

The battery 120 of FIG. 1 may be disposed in the main body 101 of the laptop computer 100a. However, the present general inventive concept is not limited thereto. It is possible that the battery 120 may be disposed in the display body 102. It is also possible that the battery 120 may include a first battery disposed in the main body 110 and a second battery disposed in the display body 102. In this case, the battery charging state may include a first battery charging (remaining) state of the first battery and a second battery charging (remaining) state of the second battery. Accordingly, the display unit 110 may display one or more images including the first battery charging state and the second battery charging state thereon.

The battery charging state may be variable according to a charged amount change of the battery during displaying the battery charging state on the display unit 110. Accordingly, a displayed image of the battery charging state in the corresponding region of the display device 110 may be changed according to a battery charging (or remaining) amount of the battery 120.

The methods of controlling an electronic apparatus according to the above-described various exemplary embodiments may be implemented with a program code, stored in various types of non-transitory computer-readable media, and provided to the electronic apparatus.

The present general inventive concept can also be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include a semiconductor memory, a read-only memory (ROM), a random-access memory (RAM), a universal serial bus (USB), a memory card, a blue-ray disc, CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

Although a few embodiments of the present general inventive concept have been shown and described, it will be appreciated by those skilled in the art that changes may be made in these embodiments without departing from the principles of the general inventive concept, the scope of which is defined in the appended claims.

## Claims

1. A method of controlling an electronic apparatus having a plurality of operation modes, the method comprising:
receiving a user input to select an operation mode of the electronic apparatus in a power-off state of the electronic apparatus;
supplying power only to one or more portions of components of the electronic apparatus required to operate in a battery charging state display mode when the operation mode selected according to the received user input is the battery charging state display mode; and
displaying a battery charging state of a battery when the power is supplied to the components required to operate in the battery charging state display mode.

2. The method of claim 1, further comprising:
supplying the power only to one or more portions of the components of the electronic apparatus required to operate in a power-on mode when the operation mode selected according to the received user input is the power-on mode; and
displaying an operating system execution screen when the power is supplied to the components required to operate in the power-on mode.

3. The method of claim 2, wherein the user input includes at least one of a first user input to select a first input unit for the battery charging state display mode, a second user input to select a second input unit for the power-on mode, and a third user input to connect an external power supply to the electronic apparatus.

4. The method of claim 3, further comprising:
determining the selected operation mode to the battery charging state display mode when the user input is the third user input to connect the external power supply to the electronic apparatus or the first user input to select the first input unit; and
determining the selected operation mode to the power-on mode when the user input is the second user input to select the second input unit.

5. The method of any one of claims 1 to 4, wherein the portions of the components of the electronic apparatus required to operate in the battery charging state display mode includes a central processing unit CPU, a volatile memory, a non-volatile memory, a main board chipset, a graphic processor, and a display unit.

6. The method of any one of claims 1 to 5, further comprising:
performing a first booting operation corresponding to the battery charging state display mode when the power is supplied only to the components required to operate in the battery charging state display mode,
wherein the performing the first booting operation includes:
initializing only a portion of a storage space of the volatile memory required to operate in the battery charging state display mode; and
initializing a graphic processor to provide a graphic display,
wherein the displaying a charging state of a battery is performed after the first booting operation is completed.

7. The method of any one of claims 1 to 6, further comprising:
performing a first booting operation to correspond to the battery charging state display mode; and
performing a second booting operation corresponding to the power-on mode when the power is supplied to the components required to operate in the power-on mode,
wherein the performing a second booting operation includes:
initializing an entire storage space of the volatile memory; and
initializing all the components of the electronic apparatus required to operate in the power-on mode,
wherein the displaying an operating system execution screen is performed when the second booting operation is completed.

8. The method of any one of claims 1 to 7, further comprising entering an S3 power-saving state when a battery charging state display period exceeds a preset duration.

9. The method of claim 8, further comprising entering a power-off mode when the external power supply is disconnected from the electronic apparatus in the battery charging state display mode or the S3 power-saving state.

10. The method of claim 8 or 9, further comprising, when the second input unit for the power-on mode is selected according to the user input in the battery charging state display mode or the S3 power-saving state:
supplying the power to portions of the components of the electronic apparatus required to operate in the power-on mode; and
performing a second booting operation corresponding to the power-on mode.

11. The method of any one of claims 1 to 10, wherein the displaying the battery charging state of the battery includes additionally displaying time information to the battery charging state of the battery.

12. An electronic apparatus having a plurality of operation modes, the electronic apparatus comprising:
a display unit;
a battery configured to store charged direct current DC power;
an input unit configured to receive a user input to select an operation mode of the electronic apparatus;
a power supply controller configured to supply power only to one or more portions of components of the electronic apparatus required to operate in a battery charging state display mode when the operation mode selected according to the received user input is the battery charging state display mode in a power-off state of the electronic apparatus; and
a controller configured to control the display unit to display a battery charging state of a battery when the power is supplied only to the components of the electronic apparatus required to operate in the battery charging state display mode.

13. The electronic apparatus of claim 12, wherein the power supply controller supplies the power to one or more portions of the components of the electronic apparatus required to operate in a power-on mode when the operation mode selected according to the received user input is the power-on mode; and
the controller controls the display unit to display an operating system execution screen when the power is supplied to the components required to operate in the power-on mode.

14. The electronic apparatus of claim 13, wherein the input unit includes:
a first input unit configured to receive a first user input to select the battery charging state display mode;
a second input unit configured to receive a second user input to select the power-on model; and
an external power input unit configured to receive a third user input to connect an external power supply to the electronic apparatus.

15. The electronic apparatus as claimed in any one of claims 12 to 14, wherein the electronic apparatus is a laptop computer.
